# EUROPEAN PATENT APPLICATION

(11) **EP 2 704 359 A1**
(43) Date of publication of application: **05.03.2014**
(21) Application number: 13020086.8
(22) Date of filing: 02.09.2013
(51) Int. Cl.: H04L 12/24, H04W 4/00, H04L 29/08

(54) **Method of handling web interaction sessions in OMA DM systems**

(30) Priority: 31.08.2012 US 201261695310 P
(71) Applicant: HTC Corporation, Taoyuan County 330 (TW)
(72) Inventor: Yu, Chun-Ta, Taoyuan City 330 (TW); Tseng, Yin-Yeh, Taoyuan City 330 (TW)
(74) Representative: Emde, Eric

(57) **Abstract**

A method of handling a device management (DM) session for a DM client in a service system supporting open mobile alliance (OMA) DM protocol includes receiving a command from a DM server of the service system via the DM session; performing an interaction session with a web server via a web browser; and reporting status information related to the interaction session to the DM server for instructing the DM server to continue performing the DM session even the interaction session is still continuously performed.

## Description

### Background of the Invention

### 1. Field of the Invention

The present invention relates to a method used in a service system supporting open mobile alliance (OMA) device management (DM) protocol, and more particularly, to a method of handling a DM session in a service system supporting OMA DM protocol.

### 2. Description of the Prior Art

The Open Mobile Alliance (OMA) is founded to develop OMA specifications for mobile services to meet users' needs. Furthermore, the OMA specifications aim to provide the mobile services which are interoperable across geographic areas (e.g. countries), operators, service providers, networks, operation systems and mobile devices. In detail, the mobile services conforming to the OMA specifications can be used by the users without restriction to particular operators and service providers. The mobile services conforming to the OMA specifications is also bearer agnostic, i.e., the bearer that carries the mobile services can be a second generation (2G) mobile system such as GSM, EDGE or GPRS, or a third generation (3G) and beyond mobile system such as UMTS, LTE or LTE-Advanced. Further, the mobile services can be executed on an operation system such as Windows, Android or Linux operated on various mobile devices. Therefore, industries providing devices or the mobile services supporting the OMA specifications can benefit from a largely growing market enabled by interoperability of the mobile services. Besides, the users use the devices or the mobile services supporting the OMA specifications can also have a better experience due to the interoperability of the mobile services.

In OMA Device Management (DM) requirement, a Management Authority (MA) is defined as an authorized legal entity which can manage one or more DM clients (e.g. mobile devices) by using the OMA DM protocol. Furthermore, according to deployment of a system supporting the OMA, the MA may directly manage the DM client, or the MA may manage the DM client via one or multiple DM servers, i.e., the DM client is actually managed by the one or the multiple DM servers. In detail, the DM protocol defines a way according to which a packet or a message is exchanged between the MA and the DM client. The DM protocol also defines a way according to which the DM client can feedback a command, a status or a report to the MA. Further, when using the OMA DM protocol, the MA manages the mobile device through a set of management objects in the DM client which may be small as an integer or large as a picture. For example, a management object can be a Software Component Management Object (SCOMO), a Software and Application Control Management Obj ect (SACMO) or a Firmware Update Management Object (FUMO).

According to the current OMA DM protocol, many commands are defined differently from the previous DM protocol. For example, the DM server is allowed to activate a user input (UI) session with the DM client via sending a command in a DM session. After receiving the command, the DM client may open a web browser and display the information related to the UI session to the user. When the UI session between the DM server and the DM client is performed, the DM server stops executing the DM session with the DM client. Until the UI session finishes and the DM server retrieves necessary information from the DM client, the DM server is then allowed to continue to perform the DM session. In other words, the DM server needs to be idle till the UI session completes, resulting in inefficiency of the service system.

### Summary of the Invention

In order to solve the above problem, the present disclosure provides a method of handling a device management (DM) session in a service system supporting open mobile alliance (OMA) DM protocol.

The present disclosure discloses a method of handling a device management (DM) session for a DM client in a service system supporting open mobile alliance (OMA) DM protocol. The method comprises receiving a command from a DM server of the service system via the DM session; performing an interaction session with a web server via a web browser; and reporting status information related to the interaction session to the DM server for instructing the DM server to continue performing the DM session even the interaction session is still continuously performed.

The present disclosure further discloses a method of handling a device management (DM) session for a DM server in a service system supporting open mobile alliance (OMA) DM protocol. The method comprises transmitting a command to a DM client of the service system via the DM session, for instructing the DM client to perform an interaction session with a web server via a web browser; and continuing performing the DM session with the DM client after receiving status information from the DM client, even the interaction session is still continuously performed.

These and other objectives of the present invention will no doubt become obvious to those of ordinary skill in the art after reading the following detailed description of the preferred embodiment that is illustrated in the various figures and drawings.

### Brief Description of the Drawings

FIG.1 is a schematic diagram of a service system according to an example of the present disclosure.

FIG.2 is a schematic diagram of a communication device according to an example of the present disclosure.

FIG. 3 is a flowchart of a process according to an example of the present disclosure.

FIG. 4 is a flowchart of aother process according to an example of the present disclosure.

FIG. 5 is a schematic diagram of handling a device management session according to an example of the present disclosure.

FIG. 6 is a schematic diagram of handling a device management session according to another example of the present disclosure.

FIG. 7 is a schematic diagram of handling a device management session according to still another example of the present disclosure.

FIG. 8 is a schematic diagram of handling a device management session according to another example of the present disclosure.

### Detailed Description

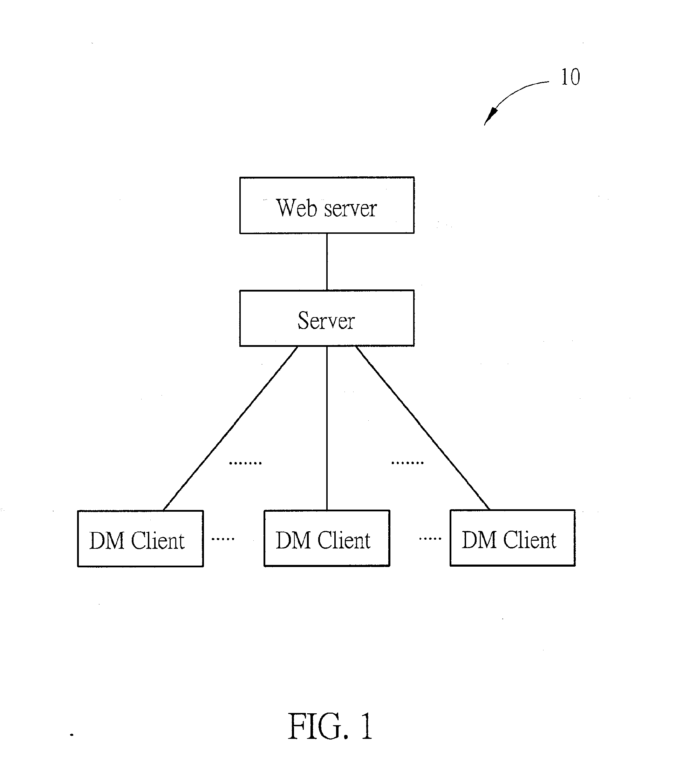

Please refer to Fig. 1, which is a schematic diagram of a service system 10 according to an example of the present disclosure. The service system 10 supports an Open Mobile Alliance (OMA) Device Management (DM) protocol and is briefly composed of a web server, a server and a plurality of DM clients. Further, the server manages a DM client conforming to the OMA DM protocol through management objects of the DM client. In Fig. 1, the web server,the server and the DM clients are simply utilized for illustrating the structure of the service system 10. Practically, the server can be referred as a plurality of DM servers or a pluraity of DM servers administrated by a Management Authority (MA), according to deployment of the service system 10. In the previous case, the plurality of DM servers can directly manage the clients, while the MA manages the DM clients via the plurality of DM servers in the later case. Without loss of generality, the server used hereafter refers to the MA or a DM server which manages the clients. The clients can be desktops and home electronics which are fixed at a certain position. Alternatively, the DM clients can be mobile devices such as mobile phones, laptops, tablet computers, electronic books, and portable computer systems. The management objects can be bearer agnostic, i.e., the bearer that carries the management objects can be a second generation (2G) mobile system such as Global System for Mobile Communications (GSM), Enhanced Data rates for GSM Evolution (EDGE) or General Packet Radio Service (GPRS), a third generation (3G) mobile system such as Universal Mobile Telecommunications System (UMTS), Long Term Evolution (LTE) or LTE-Advanced or even a wireless communication system such as an Asymmetric Digital Subscriber Line (ADSL).

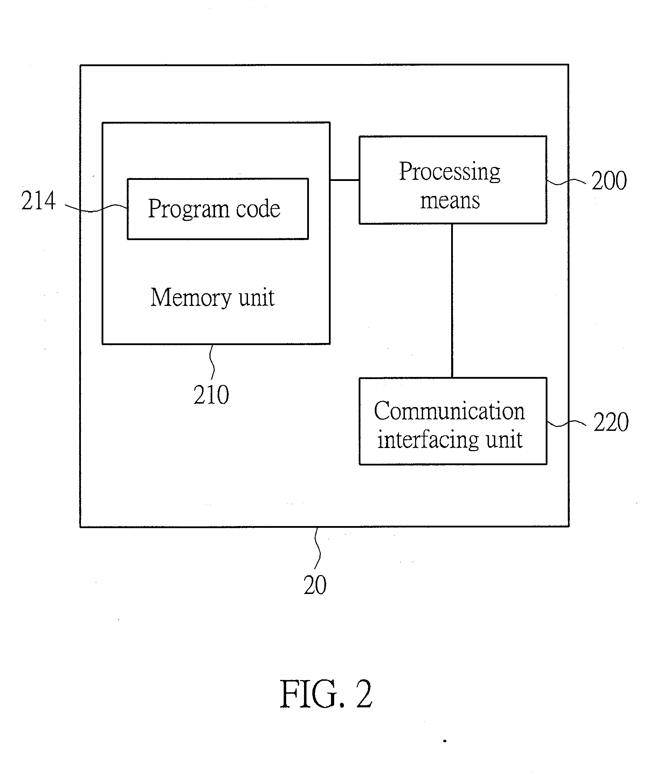

Please refer to Fig. 2, which is a schematic diagram of a communication device 20 according to an example of the present disclosure. The communication device 20 can be the DM client or the server shown in Fig. 1, but is not limited herein. The communication device 20 may include a processor 200 such as a microprocessor or Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a transceiver and can exchange signals with the server according to processing results of the processor 200.

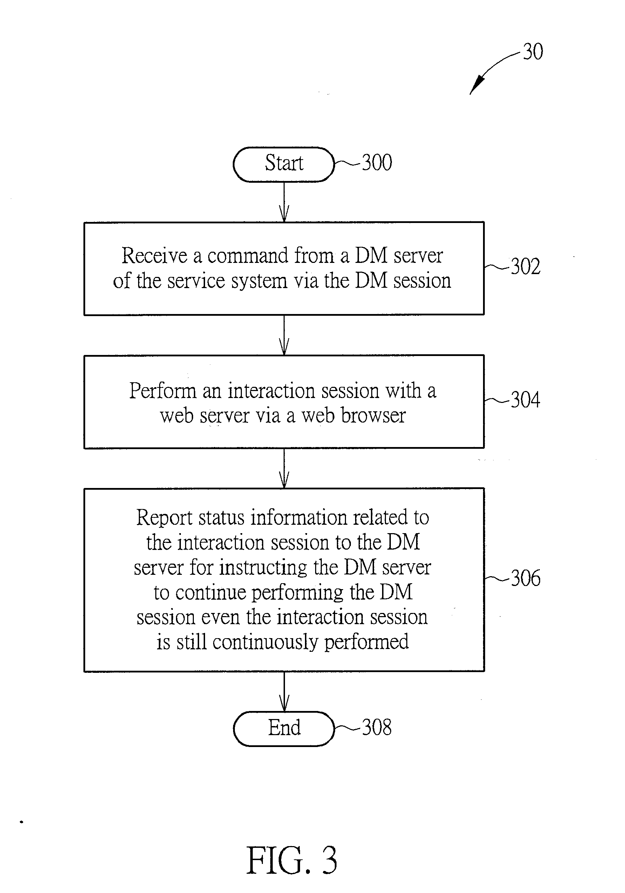

Please refer to Fig. 3, which is a flowchart of a process 30 according to an example of the present disclosure. The process 30 is utilized in a DM client of the service system 10 shown in Fig. 1, for handling a DM session. The process 30 may be compiled into the program code 214 and includes the following steps:

Step 300: Start.

Step 302: Receive a command from a DM server of the service system via a DM session.

Step 304: Perform an interaction session with a web server via a web browser.

Step 306: Report status information related to the interaction session to the DM server for instructing the DM server to continue performing the DM session even the interaction session is still continuously performed.

Step 308: End.

According to the process 30, the DM client performs an interaction session (e.g. a user input (UI) session) with the DM server after receving a command (e.g. a SHOW command) from a DM server via a DM session. The DM client may activate a web browser for performing the interaction session with a web server. After the interaction session is established, the DM client reports status information related to the interaction session to the DM server, for instructing the DM server to continue performomg the DM session. In other words, the interaction session and the DM session are excuted at the same time. Please note that, the status information may indicate whether the interaction session is successfully established, or other information related to the interaction session. As a result, the DM server is not idle when the interaction session is performed. Instead, the DM server keeps performing the DM session when the interaction session is still continuously performed. The efficiency of the service system is improved, therefore.

Furthermore, when the web browser receives an input information corresponding to the interaction session from the user, the web browser transmits the input information to the DM server via the web server for allowing the DM server to perform the DM session according to the input information. The web borswer further transmits an event of the input information to the DM client for indicating to the DM client the input information is sent from the web browser to the web server. According to the different design concepts and applications, the method of transmitting the input information to the DM server can be various. In an example, the DM server receives the input information from the web server after the web broswer transmits the input information to the web server. In another example, the DM server accesses the web server, periodically, for retrieving the input information. After the web browser transmits the input information to the web server, the DM server can obtain the input information through the periodic accesses. In still another example, after reveiving the event of the input information, the DM client sends a notification message for indicating to the DM server the input information has been transmiited to the web server. The DM server therefore can access the input information from the web server. In another example, after the web browser transmits the input information to the web server, the web server sends a notification message to the DM server, to indicate that the input information has been stored in the web server. The DM server then accesses the web server for retrieving the input information according to the notification message transmitted by the web server.

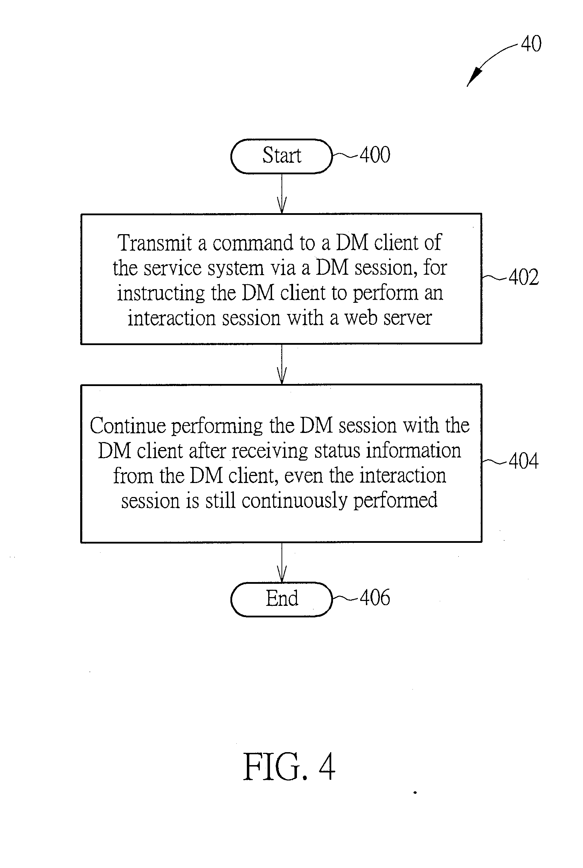

According to the above description, operations of the DM server can be summarized into a process 40 as shown in Fig. 4. The process 40 can be utilized in a DM server of the service system 10 and includes the following steps:

Step 400: Start.

Step 402: Transmit a command to a DM client of the service system via a DM session, for instructing the DM client to perform an interaction session with a web server.

Step 404: Continue performing the DM session with the DM client after receiving status information from the DM client, even the interaction session is still continuously performed.

Step 406: End.

Detailed operations of the process 40 can be referred to the above, and are not narrated herein for brevity. According to the process 40, the DM server can perform the DM session while executing the interaction session with the DM client.

As mentioned previously, the DM server may further obtain the input information corresponding to the interaction session via different methods. In an example, the DM server receives the input information from a web server after the web browser transmits the input information to the web server. In another example, the DM server accesses a web server, periodically, for retrieving the input information. After the web browser transmits the input information to the web server, the DM server acquires the input information through the periodic accesses. In still another example, the DM server accesses the input information from the web server, when receiving a notification message, which indicates that the input information has been transmitted to the web server, from the DM client. In another example, after the web server receives the input information from the web browser, the web server sends a notification message to the DM server, to indicate that the input information has been stored in the web server. The DM server then accesses the web server for retrieving the input information according to the notification message transmitted by the web server.

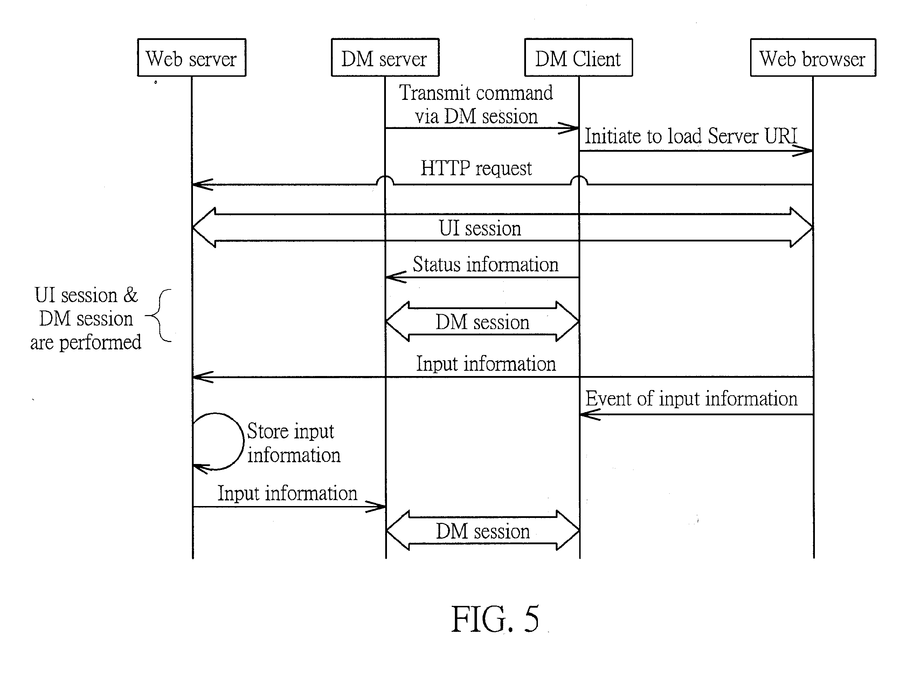

Take an example based on the processes 30 and 40. Please refer to FIG. 5, which is a schematic diagram of handling a DM session according to an example of the present disclosure. As shown in FIG. 5, the DM server first transmits a command to the DM client for performing an interaction session via a DM session. After the DM client receives the command, the DM client activates a web browser to load a server uniform resource identifier (URI) of a web server and the web browser sends a request (e.g. a HyperText Transfer Protocol (HTTP) request) to the web server according to the server URI. The interaction session is performed between the web server and the web browser, therfore. Next, the DM client reports status inforamtion corresponding to the interaction session for instructing the DM server to continue perfoming the DM session when the interaction session is performed. After an input information corresponding to the interaction session is acquired by the web browser, the web browser transmits the input information to the web server and transmits an event corresponding to the interaction session. The web server stores the input information andtransmits the input information to the DM server. Finally,the DM server performs the DM session according to the input information.

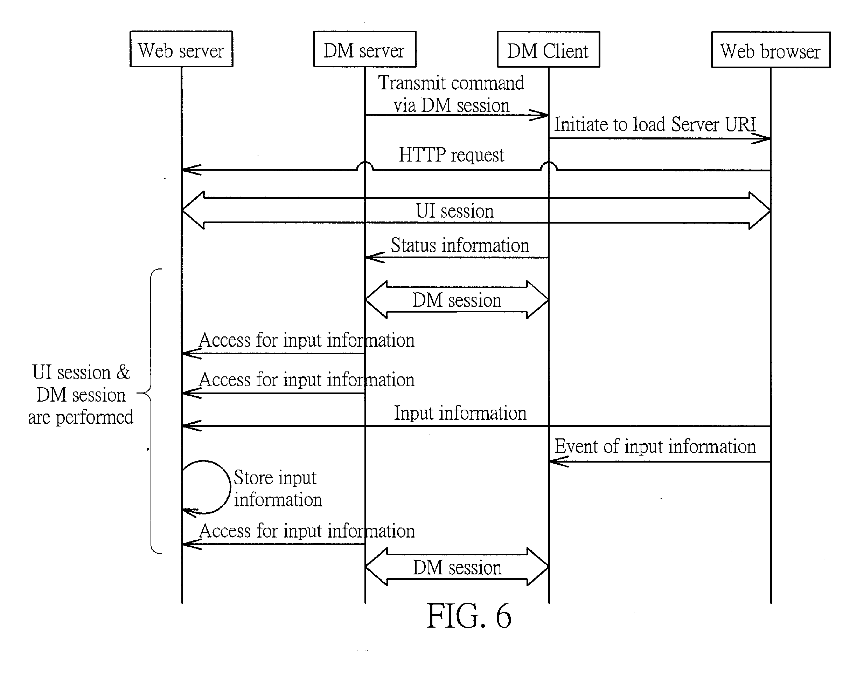

Please refer to FIG. 6, which is a schematic diagram of handling a DM session according to another exmple of the present disclosure. Similar to the example shown in FIG. 5, the DM server performs the DM session when the interaction session between the web server and the web browser is executed. In this example, the DM server accesses the web server for an input infromation corresponding to the interaction session, periodically, when the interaction session and the DM seesion are performed. After the web browser acquires the input infromation and transmits the input information to the web server, the DM server retrieves the input information via the periodical accesses and performs the DM session according to the input information.

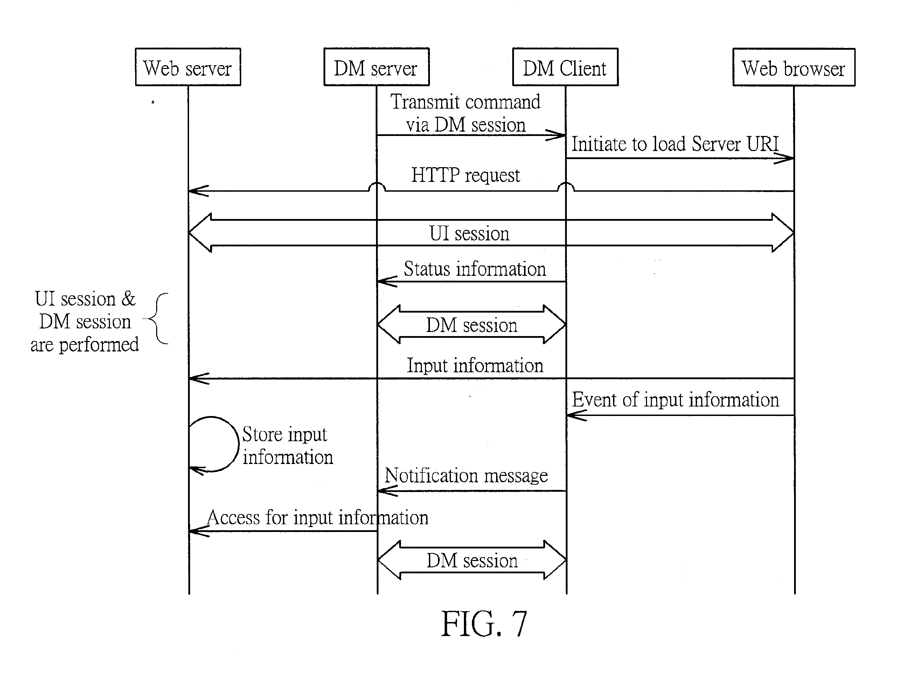

Please refer to FIG. 7, which is a schematic diagram of handling a DM session according to still another exmple of the present disclosure. Similar to the examples shown in FIG. 5 and FIG. 6, the DM server performs the DM session when the interaction session between the web server and the web browser is executed. In this example, the DM client sends a notification message to the DM server after the web browser transmits the input information to the web server and sends an event corresponding to the interaction session to the DM client. After receiving the notification message form the DM client, the DM server acceses the input information from the web server and performs the DM session according to the input informaion.

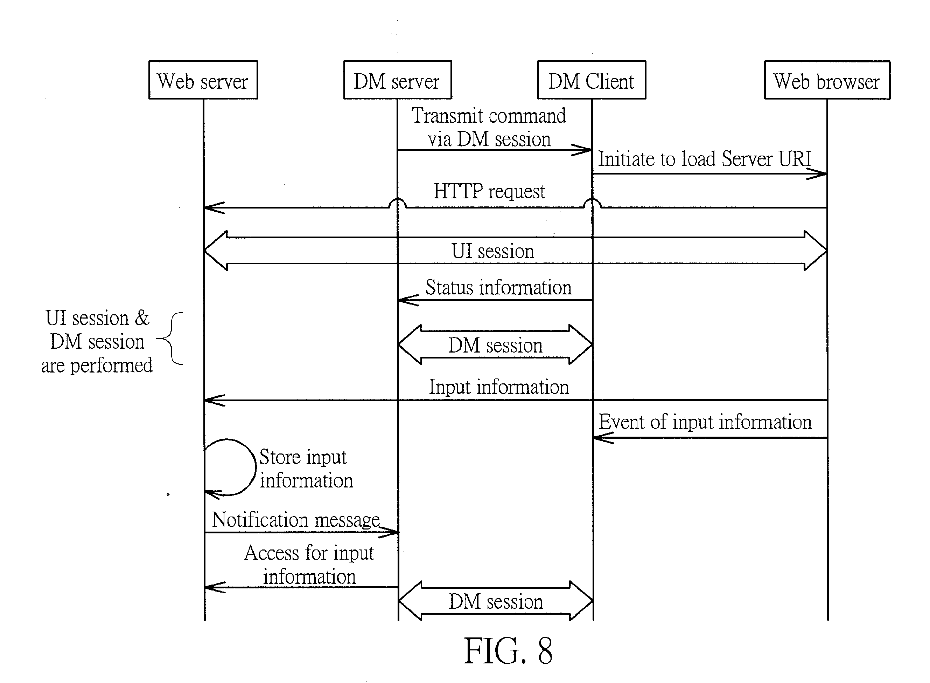

Please refer to FIG. 8, which is a schematic diagram of handling a DM session according to another exmple of the present disclosure. Similar to the examples shown in FIGS. 5-7, the DM server performs the DM session when the interaction session between the web server and the web browser is executed. In this example, after the web browser acuqires an input information and transmits the input information to the web server, the web server stores the input inforamtion and sends a notification message to the DM server. After receiving the notification message from the web server, the DM server acceses the input information from the web server and performs the DM session according to the input informaion.

The embodiments shown in FIG. 5 to FIG. 8 are to illustrate the flows of the processes 30 and 40, and those skilled in the art should readily make combinations, modifications and/or alterations on the abovementioned description and examples. Furthermore, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present disclosure provides a method for handling a DM session in a service system supporting OMA DM protocol. The problem of performing the DM session inefficiently is solved. As a result, performance of the service system is improved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a device management (DM) session for a DM client in a service system supporting open mobile alliance (OMA) DM protocol, the method comprising:
receiving a command from a DM server of the service system via the DM session;
performing an interaction session with a web server via a web browser; and
reporting status information related to the interaction session to the DM server for instructing the DM server to continue performing the DM session even the interaction session is still continuously performed.

2. The method of claim 1, further comprising:
receiving an event of input information corresponding to the interaction session via the web browser if the input information is sent from the web browser to the web server.

3. The method of claim 2, further comprising:
transmitting a notification message to the DM server, for indicating to the DM server the input information has been transmitted to the web server.

4. A method of handling a device management (DM) session for a DM server in a service system supporting open mobile alliance (OMA) DM protocol, the method comprising:
transmitting a command to a DM client of the service system via the DM session, for instructing the DM client to perform an interaction session with a web server via a web browser; and
continuing performing the DM session with the DM client after receiving status information from the DM client, even the interaction session is still continuously performed.

5. The method of claim 4, further comprising:
acquiring an input information related to the interaction session; and
performing the DM session with the DM client according to the input information.

6. The method of claim 5, wherein the step of acquiring the input information related to the interaction session comprises:
receiving the input information related to the interaction session from the web server.

7. The method of claim 5, wherein the step of acquiring the input information related to the interaction session comprises:
accessing the web server, periodically, till retrieving the input information.

8. The method of claim 5, wherein the step of acquiring the input information related to the interaction session comprises:
receiving a notification message from the DM client; and
accessing the input information related to the interaction session from the web server.

9. The method of claim 5, further comprising:
receiving a notification message from the web server; and
accessing the input information related to the interaction session from the web server.
